# EUROPÄISCHE PATENTSCHRIFT

(11) **EP 1 814 001 B1**
(45) Veröffentlichungstag und Bekanntmachung des Hinweises auf die Patenterteilung: **16.09.2015**
(21) Anmeldenummer: 06124740.9
(22) Anmeldetag: 24.11.2006
(51) Int. Cl.: G05B 19/042

(54) **Verfahren zum Betrieb eines Automatisierungsgerätes und Automatisierungsgerät**
Automation device and method for operating an automation device
Appareil d'automatisation et procédé d'opération d'un appareil d'automatisation

(30) Priorität: 11.01.2006 DE 102006001500
(43) Veröffentlichungstag der Anmeldung: 01.08.2007
(73) Patentinhaber: Siemens Aktiengesellschaft, 80333 München (DE)
(72) Erfinder: Brune, Richard, 90765 Fürth (DE)

(56) Entgegenhaltungen:
- EP-A- 1 312 990
- BENSON D ET AL: "Multimedia data management for process control" MULTIMEDIA COMPUTING AND SYSTEMS, 1994., PROCEEDINGS OF THE INTERNATIO NAL CONFERENCE ON BOSTON, MA, USA 15-19 MAY 1994, LOS ALAMITOS, CA, USA,IEEE COMPUT. SOC, 15. Mai 1994 (1994-05-15), Seiten 332-341, XP010098238 ISBN: 978-0-8186-5530-2
- SHINDO S ET AL: "Multimedia support to stormwater pump operation" SYSTEMS, MAN AND CYBERNETICS, 1996., IEEE INTERNATIONAL CONFERENCE ON BEIJING, CHINA 14-17 OCT. 1996, NEW YORK, NY, USA,IEEE, US, Bd. 2, 14. Oktober 1996 (1996-10-14), Seiten 1339-1344, XP010207000 ISBN: 978-0-7803-3280-5

## Beschreibung

Die Erfindung betrifft ein Verfahren zum Betrieb eines Automatisierungsgerätes in Kombination mit einem angeschlossenen Bediengerät. Speziell bezieht sich die Erfindung auf den Betrieb eines Automatisierungsgerätes beim Zugriff auf Daten des Automatisierungsgerätes, also z.B. beim Konfigurieren oder Parametrieren des Automatisierungsgerätes oder beim Auslesen von Statusinformationen aus dem Automatisierungsgerät.

In diesem Zusammenhang ist bekannt geworden, einen Webserver und/oder ein Webclient zu verwenden.

Dieser bekannte Ansatz trägt aber noch nicht in ausreichendem Maße den zunehmenden Bestrebungen der interaktiven Benutzerführung Rechnung.

Ältere Ansätze gehen noch von einer Zusammenführung der jeweiligen Daten erst am Endgerät aus, z.B. derart, dass auf einem Bildschirm eines Bediengerätes sowohl numerische Daten als auch Bilddaten angezeigt werden, wie dies in den Fachartikeln von Dan Benson et al, Multimedia Data Management in Process Conrol, 1994 oder Seeicho Shindo et al, Multimedia Support to Stromwater Pump Operation, 1996, jeweils in IEEE Proceeding, in zum Ausdruck kommt. Die EP 1 312 990 A erwähnt die Möglichkeit, Bild- oder Tondaten im Zuge einer Übertragung zu komprimieren.

Der Erfindung liegt daher die Aufgabe zugrunde, ein Verfahren zum Betrieb eines Automatisierungsgerätes anzugeben, mit dem die Benutzerführung noch besser gestaltet werden kann.

Der Begriff "Automatisierungsgerät" umfasst sämtliche Geräte, Einrichtungen oder Systeme, also neben z.B. Steuerungen, wie speicherprogrammierbaren Steuerungen, Prozessrechnern, (Industrie-)Computern und dergleichen auch Antriebssteuerungen, Frequenzumrichter und Ähnliches, wie sie zur Steuerung, Regelung und/oder Überwachung technologischer Prozesse z.B. zum Umformen oder Transportieren von Material, Energie oder Information etc. eingesetzt werden oder einsetzbar sind, wobei insbesondere über geeignete technische Einrichtungen, wie z.B. Sensoren oder Aktoren, Energie aufgewandt oder gewandelt wird.

Die genannte Aufgabe wird erfindungsgemäß mit einem Verfahren mit den Merkmalen des Anspruchs 1 gelöst.

Dazu sind bei einem Verfahren zum Betrieb eines Automatisierungsgerätes in Kombination mit einem angeschlossenen Bediengerät, wobei das Automatisierungsgerät Kodiermittel zum Kodieren kombinierter Mediendaten, z.B. einen so genannten Mediaserver, und das Bediengerät Dekodiermittel zum Dekodieren solcher Mediendaten, z.B. einen so genannten Mediaplayer, umfasst, insbesondere folgende Verfahrensschritte vorgesehen: Zunächst wird vom Bediengerät ein Datum an das Automatisierungsgerät zur Anforderung von Mediendaten beim Automatisierungsgerät gesandt. Daraufhin werden auf Seiten des Automatisierungsgerätes die Mediendaten entsprechend dem empfangenen Datum durch das oder die Kodiermittel generiert. In einem nächsten Schritt werden die Mediendaten vom Automatisierungsgerät an das angeschlossene Bediengerät übertragen. Schließlich werden auf Seiten des Bediengerätes durch das oder die Dekodiermittel die empfangenen Mediendaten dekodiert, insbesondere dekodiert und wiedergegeben.

Gemäß der Erfindung ist also vorgesehen, dass zur Benutzerführung Mediendaten an das Bediengerät übertragen werden. Die Bedeutung von Mediendaten ist im Zusammenhang mit der vorliegenden Erfindung allerdings eng gefasst, so dass als Mediendaten keine Daten verstanden werden, die "reinen" Text, gegebenenfalls reinen Text in formatierter Form, also Text zusammen mit Formatierungsanweisungen, darstellen. Bei der Erfindung geht es vielmehr darum, die zu übermittelnden Daten, also bei Konfigurationen, Parametrierungen oder Statusabfragen durchaus auch Zahlenwerte und/oder Textinformationen, in Mediendaten in Form von Bildinformationen einzubetten.

Spezielle Ausführungsformen der genannten Kodier- und Dekodiermittel sind durch entsprechende Applikationen im Personalcomputerbereich bekannt. Dort stellt ein "Mediaserver" Bildinformationen, gegebenenfalls Bildinformationen und Toninformationen, in einem kontinuierlichen Datenstrom zur Verfügung, wobei dieser Datenstrom durch einen "Mediaplayer" verarbeitet, d.h. dekodiert und wiedergegeben, wird. In Er-und Übertragung dieses Konzeptes auf das Einsatzgebiet der Automatisierung technischer Prozesse ist erfindungsgemäß vorgesehen, dass z.B. zur Zustandsabfrage die abgefragten Zustandsinformationen, also die auf Seiten des Automatisierungsgerätes ursprünglich als reine Zahlenwerte und/oder Textdaten vorliegenden Zustandsinformationen, in einen solchen Datenstrom übernommen werden und dass dieser Datenstrom, die genannten Mediendaten, an das angeschlossene Bediengerät zur Wiedergabe übertragen wird. Im einfachsten Fall kann man sich die Daten, die neben den abgefragten Zustandsdaten dann Bestandteil der Mediendaten sind, als eine Art "Hintergrundbild" vorstellen, die auf Seiten des Bediengerätes zusammen mit den abgefragten Zustandsdaten dargestellt werden. An Stelle eines "einfachen Hintergrundes" können natürlich auch beliebige andere Informationen vorgesehen sein, die sich im Wege solcher Mediendaten übermitteln lassen, z.B. Videosequenzen zur Veranschaulichung eines Handhabungsvorgangs im Zusammenhang mit einem Installationsprozess oder ähnliches.

Zweckmäßige Weiterbildungen dieses Verfahrens sind Gegenstand der auf den diesbezüglichen Anspruch rückbezogenen Unteransprüche.

Der Vorteil der Erfindung besteht darin, dass durch Übermittlung von Mediendaten die Bandbreite der vermittelbaren Informationen deutlich ansteigt. Zudem ist speziell im Zusammenhang mit Installationsvorgängen eine bildliche Veranschaulichung der dazu notwendigen Handhabungen für den jeweiligen Bediener häufig sowohl hilfreicher als auch schneller zu erfassen als der bisher nötige Blick in ein Handbuch.

Vorteilhaft ist vorgesehen, dass zum Erhalt der Mediendaten statische Mediendaten aus einer ersten Datenbasis für statische Mediendaten und dynamische Mediendaten aus einer zweiten Datenbasis für dynamische Mediendaten kombiniert werden. Beide Datenbasen werden dabei entweder direkt auf dem Automatisierungsgerät vorgehalten oder derart vorgehalten, dass das Automatisierungsgerät Zugriff auf diese Datenbasen hat. Beispiele für statische Mediendaten sind z.B. ein unveränderlicher Bildschirmhintergrund oder eine Innenansicht eines zu bedienenden Gerätes. Des Weiteren kommen als statische Daten auch solche Mediendaten in Betracht, die z.B. auf statischen Zustandsinformationen oder Konfigurationsdaten basieren, also z.B. eine Geräteansicht mit einer eingeblendeten Geräteseriennummer. Dynamische Mediendaten sind in erster Linie Video- und/oder Audiodaten, die zur Vermittlung von Zusatzinformationen oder im Einzelfall auch schlicht zur graphischen Veranschaulichung der übertragenen Zustands- oder Konfigurationsdaten vorgesehen sind.

Weiter bevorzugt ist gemäß der Erfindung vorgesehen, dass das Kombinieren statischer und/oder dynamischer Mediendaten aufgrund des empfangenen Datums derart erfolgt, dass das Datum auf Seiten des Bediengerätes entsprechend einer Auswahl eines Bedieners ausgewählt oder erzeugt wird, dass das Datum diejenigen statischen und/oder dynamischen Mediendaten, die aufgrund einer festgelegten oder dynamischen Beziehung mit der Auswahl des Benutzers assoziiert sind, referenziert und dass eine Kombination der referenzierten Mediendaten, eine anschließende Kodierung der kombinierten Mediendaten und schließlich ein Transfer der kodierten Mediendaten an das Bediengerät als Antwort auf das übersandte Datum erfolgt. Das vom Bediengerät an das Automatisierungsgerät übersandte Datum fungiert also als Identifizierer für die jeweils über das Bediengerät abgefragten Daten des Automatisierungsgerätes. Das Datum referenziert dabei jedoch nicht nur die jeweils abgefragten Daten, also z.B. Zustands- oder Konfigurationsdaten, sondern darüber hinaus auch diejenigen statischen und/oder dynamischen Mediendaten, die mit der zugrunde liegenden Auswahl des Benutzers assoziiert sind. Die in dieser Hinsicht zugrunde liegende Assoziierung kann aufgrund einer festgelegten oder variablen Beziehung vorgegeben sein.

Für eine Abfrage einfacher Konfigurationsdaten kann in diesem Zusammenhang z.B. vorgesehen sein, dass das Datum Informationen umfasst, die eine Abfrage einer Hardwaregerätenummer sowie eine Abfrage einer Revisionsnummer einer auf dem Automatisierungsgerät implementierten Software referenziert. Darüber hinaus kann vorgesehen sein, dass das Datum als Mediendaten z.B. eine Graphik oder eine kurze Videosequenz referenziert, die das jeweilige Automatisierungsgerät präsentiert.

Dieses Konzept ist beliebig erweiterbar, insbesondere dahingehend, dass in dem Datum eine vorgegebene Abfolge der Abfrage von Daten aus dem Automatisierungsgerät referenziert ist, z.B. derart, dass mit einem Hintergrundbild des Gerätes zunächst die Hardwaregerätenummer dargestellt wird und nach Ablauf einer vorgebbaren oder vorgegebenen Zeitspanne mit einem anderen Hintergrundbild, z.B. einem Datenträger für Computerprogramme, die Softwareversionsnummer eingeblendet wird.

Schließlich kann auch vorgesehen sein, dass referenzierte statische und/oder dynamische Mediendaten Bildschirmmasken repräsentieren und das einzelne Status-/oder Konfigurationsinformationen des Automatisierungsgerätes dynamische Mediendaten darstellen. Durch Referenzierung solcher Daten durch ein entsprechendes Datum bei der Anforderung durch das Bediengerät und die anschließende Darstellung der resultierenden Mediendaten auf dem Bediengerät ist es möglich, auch variable Daten, z.B. von externen technischen Prozessen aufgenommene Messwerte, in einer ansprechenden und übersichtlichen Art und Weise dem Benutzer zu präsentieren.

Bei einem Automatisierungsgerät, das beispielsweise zur Steuerung und/oder Überwachung eines chemischen Prozesses vorgesehen ist, kann dies im Zusammenhang mit der Befüllung oder dem Entleeren von Reaktoren z.B. die zahlenmäßige Anzeige des Füllstands des jeweiligen Reaktors in Form von ersten dynamischen Mediendaten und/oder die Visualisierung des Füllstandes durch entsprechende Videosequenzen als zweite dynamische Mediendaten umfassen.

Besonders bevorzugt ist beim Wiedergeben der Mediendaten auf Seiten des Bediengerätes vorgesehen, dass ein Rückspulen zu bereits wiedergegebenen und im Einzelfall auch ein Vorspulen zu noch nicht wiedergegebenen Wiedergabepositionen möglich ist. Dabei ist die Möglichkeit des Rückspulens vor allem dann interessant, wenn es darum geht, zurückliegende Abläufe schnell verifizieren zu müssen. Dies kann für einen Anlagenbediener dann wichtig sein, wenn er z.B. in einer Ausnahmesituation eine Entscheidung an Hand von aktuell am Bediengerät nicht mehr sichtbaren Daten treffen muss, z.B. an Hand eines Füllvolumens, das für einen mittlerweile entleerten Reaktor erreicht worden war. Der Aspekt des Vorspulens ist darüber hinaus vor allem für erfahrenes Personal dann relevant, wenn die Mediendaten Bild- und/oder Toninformationen umfassen, die zur Unterstützung bei Installationsvorgängen vorgesehen sind. Zusätzlich oder alternativ kann vorgesehen sein, dass die Wiedergabe der Mediendaten angehalten werden kann, so dass die jeweils aktuellen Daten in Form eines Standbilds dargestellt werden oder bleiben.

Im Zusammenhang mit der Möglichkeit des Vor- und/oder Rückspulens ist weiter bevorzugt vorgesehen, dass die Mediendaten Positionskennungen umfassen, wobei mittels jeweils einer solchen Positionskennung eine schnelle Justierung der Wiedergabeposition möglich ist. Mit solchen Positionskennungen ist eine Strukturierung der übertragenen Mediendaten, erneut insbesondere im Zusammenhang mit Mediendaten zur Unterstützung eines Installationsvorgangs relevant, nach Art eines Handbuches in unterschiedliche "Kapitel" möglich, so dass der jeweilige Bediener die ihn interessierenden Informationen gezielt auswählen kann.

Eine schnelle und effiziente Übertragung der Mediendaten vom Automatisierungsgerät an das Bediengerät ist mittels einer auf Ebene der so genannten "Transportschicht" (Schicht 4 des so genannten "OSI-Schichtenmodells") ablaufenden Kommunikation möglich. Diese Kommunikationsschicht bietet die für die zu übertragenden Daten notwendigen Protokoll- und Sicherheitsmechanismen und ist aber auch noch ausreichend schnell und flexibel um die mit Mediendaten üblicherweise korrespondierenden Datenmengen sinnvoll handhaben zu können.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnungen offenbarte Merkmalskombination zu beanspruchen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen, die zum Beispiel durch Kombination oder Abwandlung von einzelnen, in Verbindung mit den im allgemeinen oder speziellen Beschreibungsteil beschriebenen, sowie in den Ansprüchen und/oder den Zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Herstell-, Prüf- und Arbeitsverfahren betreffen.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigt die einzige Figur eine schematisch vereinfachte Darstellung eines Automatisierungsgerätes mit angeschlossenem Bediengerät.

Diese FIG zeigt ein Automatisierungsgerät 10, z.B. ein so genanntes dezentrales Feldgerät 10, das kommunikativ mit einem Bediengerät 12 verbunden ist. Bei der kommunikativen Verbindung zwischen Automatisierungsgerät 10 und Bediengerät 12 handelt es sich insbesondere um eine Busverbindung, z.B. eine Verbindung über das so genannte PROFINET. Das Automatisierungsgerät 10 umfasst als Kodiermittel 14 zum Kodieren kombinierter Mediendaten einen so genannten Mediaserver 14. Im Folgenden werden entsprechend die Begriffe Kodiermittel 14 und Mediaserver 14 synonym verwendet. Das Bediengerät 12 umfasst als korrespondierendes Dekodiermittel 16 zur Dekodierung solcher Mediendaten einen so genannten Mediaplayer 16. Im Folgenden werden entsprechend auch die Begriffe Dekodiermittel 16 und Mediaplayer 16 synonym verwendet. Zum Abrufen von Mediendaten 15 beim Automatisierungsgerät 10 ist ein Datum 18 vorgesehen, das vom Bediengerät 12 an das Automatisierungsgerät 10 zur Anforderung der Mediendaten 15 gesandt wird. Auf Seiten des Automatisierungsgerätes 10 erfolgt daraufhin eine Generierung der Mediendaten 15 durch das oder die Kodiermittel 14 entsprechend dem empfangenen Datum 18. Die generierten Mediendaten 15 werden anschließend vom Automatisierungsgerät 10 an das angeschlossene Bediengerät 12 übertragen und dort durch das Dekodiermittel 16 dekodiert, insbesondere dekodiert und wiedergegeben.

Zum Erhalt der Mediendaten 15 werden statische Mediendaten 20 aus einer ersten Datenbasis 22 für statische Mediendaten, die auf dem Automatisierungsgerät 10 vorgehalten wird oder auf die das Automatisierungsgerät 10 Zugriff hat, und dynamische Mediendaten 24 aus einer zweiten Datenbasis 26 für dynamische Mediendaten, die ebenfalls auf dem Automatisierungsgerät 10 vorgehalten wird oder auf die das Automatisierungsgerät 10 Zugriff hat, kombiniert. Für eine solche Kombination statischer und dynamischer Mediendaten 20, 24 ist ein Kombinierer 28 vorgesehen.

Das Kombinieren statischer und/oder dynamischer Mediendaten 20, 26 aufgrund des empfangenen Datums 18 erfolgt dabei derart, dass das Datum 18 auf Seiten des Bediengerätes 12 entsprechend einer Auswahl eines Bedieners ausgewählt oder erzeugt wird, dass das Datum 18 diejenigen statischen und/oder dynamischen Mediendaten 20, 26, die aufgrund einer festgelegten oder dynamischen Beziehung mit der zugrunde liegenden Auswahl des Benutzers assoziiert sind, referenziert und dass durch den Kombinierer 28 eine Kombination der referenzierten Mediendaten 20, 24, mittels des oder jedes Kodiermittels 14 eine anschließende Kodierung der kombinierten Mediendaten 30 und schließlich ein Transfer der kodierten Mediendaten 15 an das Bediengerät 12 als Antwort auf das übersandte Datum 18 erfolgt.

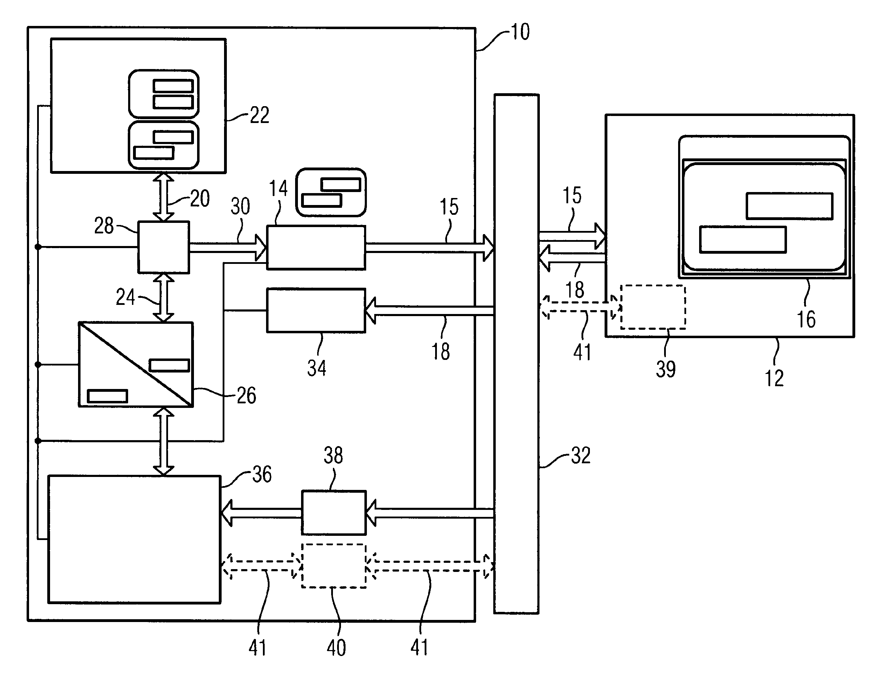

Die Übertragung der Mediendaten 15 vom Automatisierungsgerät 10 an das Bediengerät 12 erfolgt dabei über die so genannte "Transportschicht" gemäß dem OSI-Schichtenmodell für Kommunikationsinformationen verarbeitende Systeme. Zur Veranschaulichung ist die Transportschicht 32 in FIG 1 als Funktionsblock dargestellt. Zu der Aufgabe der Transportschicht 32 zählt die Segmentierung von Datenpaketen und die so genannte Stauvermeidung. Die Transportschicht 32 ist die unterste Schicht, die eine vollständige Ende-zu-Ende Kommunikation zwischen Sender und Empfänger, hier also zwischen Automatisierungsgerät 10 und Bediengerät 12, ermöglicht. Die Übertragung erfolgt dabei bevorzugt auf Basis des "Real-Time Transportprotokolls" (RTP) oder des "Real-Time Kontrollprotokolls" (RTCP).

Der Kombinierer 28, der die kombinierten Mediendaten 30 für das Kodiermittel 14 zusammenstellt, gewährleistet auch die Konsistenz der darzustellenden Informationen und Daten durch entsprechende Sicherungsmechanismen, so dass z.B. stets sichergestellt ist, das "alte" und "neue" dynamische Bildanteile gültig zusammen passen. Am Ausgang des Kodiermittels 14 kann die Verwendung gängiger Kompressionsverfahren vorgesehen sein um die zur Übermittlung vorgesehenen Mediendaten 15 auf die jeweils geänderten Informationsinhalte zu beschränken, um dabei einerseits den Bandbreitenbedarf zu reduzieren und gleichzeitig die Aktualisierungsrate zu verbessern.

Der Kombinierer 28 stellt wahlweise vorkonfigurierte Inhalte zusammen, z.B. statische Bildschirmmasken mit dynamischen Inhalten aus vorgegebenen oder vorgebbaren Variablen und/oder Parametern. Alternativ kann auch vorgesehen sein, dass der Kombinierer 28 dynamisch konfigurierte Inhalte gemäß den durch das übermittelte Datum 18 vorgegebenen Anforderungen behandelt.

In diesem Zusammenhang kann in den Datenpfad zur Entgegennahme und zur Verarbeitung des Datums 18 ein Rückführzweig 34 integriert sein, mit dem eine Medienwahl des Bedieners mit Hilfe einer Auswertungseinheit 36 umgesetzt wird. Dem Bediener stellt sich dieses am Bediengerät 12 vor oder im Zusammenhang mit der Wiedergabe der empfangenen Mediendaten 15 durch das Kodiermittel 16, also den Mediaplayer 16, ähnlich einer Auswahl nach Art einer so genannten "Playlist" (Titelliste) dar. Darüber hinaus ist vorgesehen, dass der Mediaplayer 16 eine Auswahl von Medien oder Kommandos erlaubt und generelle Anwendereingaben zulässt.

Eine solche Eingabe und eine daraus resultierende Rückmeldung an das Automatisierungsgerät 10, insbesondere also die Übermittlung des Datums 18, kann mittels eines so genannten "Applets", insbesondere eines JAVA-Applets, gehandhabt werden. In diesem Zusammenhang ist gemäß der Erfindung insbesondere vorgesehen, dass die Mediendaten 15 die jeweils benötigten Programmcode-Anweisungen, also z.B. die jeweiligen JAVA-Applets oder JAVA-Programme, umfassen. Solche Programmcode Anweisungen können sowohl standardisierte als auch anwenderspezifische Datenaustausch-Dienste (lesen/schreiben) ermöglichen. In diesem Zusammenhang nutzt das Automatisierungsgerät 10 den Rückführzweig 34 zum Entgegennehmen derartiger Daten und Kommandos.

Als Bediengerät 12 mit darauf implementiertem Mediaplayer 16, insbesondere interaktivem Mediaplayer 16, kommen neben Personalcomputern auch so genannte PDAs, MDAs, Mobiltelefone, portable Hardware zur Videowiedergabe, so genannte Streaming Clients und so genannte Operator-Panels, also Bediengeräte 12, wie sie im Zusammenhang mit Geräten zur Automatisierung industrieller Prozesse bekannt sind, in Frage.

Die Mediendaten 15 sind vor- und rückspulbar, so dass ein Rückgriff auf frühere Wiedergabe- und/oder Eingabestellen möglich ist. Ein begleitendes Rückgängigmachen von Eingaben (Undo) kann mittels der Auswertungseinheit 36 abgewickelt werden. Auf Seiten des Bediengerätes 12 kann zu Dokumentations- oder Archivierungszwecken der Strom der empfangen Mediendaten 15 auch aufgezeichnet und archiviert werden.

Die Mediendaten 15 können gemäß "DRM-Regeln (Digital Right Management)" verschlüsselt werden. Somit können einem nicht authorisierten Bediener technologisch sensible Informationen verborgen werden. Dazu ist je nach Nutzungssituation auch die Verwaltung einer Mehrzahl von Berechtigungen denkbar.

Als Transportschicht 32 kommt neben der bekannten Internet-Technik und den begleitenden Protokollen (z.B. TCP/IP) auch jede andere Verbindungsmöglichkeit in Betracht (z.B. USB, diverse Wireless Techniken, IrDa, Powerline, RS232/V24, usw.).

Zur Aktualisierung der ersten und zweiten Datenbasis 22, 26, also zur Aktualisierung der dort vorgehaltenen statischen bzw. dynamischen Mediendaten 20, 24, ist auf Seiten des Automatisierungsgerätes 10 ein FTP Server 38 oder dergleichen vorgesehen. Eine weitere Möglichkeit, Mediendaten im Automatisierungsgerät 10 zu speichern oder sie dort zu aktualisieren, ist mittels eines dafür vorgesehenen Servicekanals 39, 40, der interagiende Funktionsblöcke 39, 40 sowohl auf Seiten des Bediengerätes 12 als auch auf Seiten des Automatisierungsgerätes 10 umfasst, gegeben, so dass Mediendaten 41 auch vom Bediengerät 12 an das Automatisierungsgerät 10 gesandt werden können, wo sie entweder direkt oder mit einer nicht näher dargestellten Rekorderfunktionalität, die von der Auswertungseinheit 36 mit umfasst sein kann, aufgezeichnet werden.

Wie weiter oben bereits im Zusammenhang mit der Funktionalität des Vor- und Rückspulens erwähnt, ist die Übertragung von Mediendaten insbesondere im Zusammenhang mit Informationen, die sonst in Handbüchern, Betriebsanleitungen und dergleichen vorgehalten werden, sinnvoll. In diesem Zusammenhang ist bevorzugt vorgesehen, dass als Mediendaten auch Audio- und Videodaten in Form eines Films übertragen werden. Mit Hilfe dieses Films sowie gegebenenfalls zusätzlich in die Mediendaten eingebetteter (JAVA-) Programme wird der jeweilige Bediener durch alle notwendigen Bedienhandlungen geführt und zu interaktiven Eingaben aufgefordert. Um umfangreichere multimediale Inhalte handhaben zu können, ist vorgesehen, dass Teile solcher multimedialen Inhalte dem Kombinierer 28 auch aus dem Internet oder einem nicht dargestellten, der Kombination aus Automatisierungsgerät 10 und Bediengerät 12 zugeordneten Speicher zugeführt werden. Eine dem Film zugeordnete Tonspur kann in verschiedenen Sprachen auf dem Bediengerät 12 abgelegt sein oder über Internet oder den genannten Speicher verfügbar sein. Eine solche Vorrichtung bzw. ein korrespondierendes Verfahren erlaubt eine interaktive Inbetriebnahme mit kontextbezogenen Erläuterungen. Die vollständige multimediale Unterstützung erlaubt dabei auch ein zielgruppenorientiertes, also z.B. ein auf unterschiedlichen Bildungsstand abgestimmtes Einspielen von Inhalten. Auch im Zusammenhang mit Inbetriebnahmefunktionen kann vorgesehen sein, bestimmte Inhalte nur entsprechend authorisierten Personen zugänglich zu machen. In diesem Zusammenhang wird auf das bereits erwähnte "DRM" als Beispiel für eine Möglichkeit zur Handhabung unterschiedlicher Zugriffsmöglichkeiten auf die transportierten Informationen verwiesen.

Für eine Benutzerführung bei der Inbetriebnahme können damit im Ergebnis ganz neue Wege beschritten werden, die zudem weitestgehend unabhängig von dem für die Inbetriebnahme zur Verfügung stehenden Gerät sind. So ist eine Unterstützung der Inbetriebnahme zum Beispiel durch Geräte wie Personalcomputer, PDA, Mobiltelefon, usw. möglich. Die Bereitstellung der multimedialen Daten in Form eines so genannten "Media-Streams" erlaubt einen schnellen Start der Inbetriebnahme, da z.B. ein Film in Form einer Bedienungsanleitung nicht, anders als z.B. bei einer so genannten "Flash-Animation", vollständig auf das Bediengerät 12 herunter geladen sein muss.

Damit lässt sich die vorliegende Erfindung dahingehend zusammenfassen, dass ein Verfahren zum Betrieb eines Automatisierungsgerätes 10 vorgeschlagen wird, bei dem Mediendaten 15, insbesondere Audio- und/oder Videodaten, zur Wiedergabe von Daten zum Status und/oder zur Konfiguration des Automatisierungsgerätes 10 verwendet werden.

## Patentansprüche

1. Verfahren zum Betrieb eines Automatisierungsgerätes (10) in Kombination mit einem angeschlossenen Bediengerät (12), wobei das Automatisierungsgerät (10) Kodiermittel (14) zum Kodieren von Mediendaten und das Bediengerät (12) Dekodiermittel (16) zum Dekodieren solcher Mediendaten umfasst,
mit folgenden Verfahrensschritten:
Senden zumindest eines Datums (18) vom Bediengerät (12) an das Automatisierungsgerät (10) zur Anforderung von Mediendaten (15) vom Automatisierungsgerät (10),
generieren von Mediendaten (15) durch das oder die Kodiermittel (14) entsprechend dem empfangenen Datum (18),
übertragen der Mediendaten (15) vom Automatisierungsgerät (10) an das angeschlossene Bediengerät (12),
dekodieren, insbesondere dekodieren und wiedergeben, der empfangenen Mediendaten auf dem Bediengerät (12) durch das oder die Dekodiermittel (16),
wobei zum Erhalt der Mediendaten (15) statische Mediendaten (20) aus einer ersten Datenbasis (22) für statische Mediendaten, die auf dem Automatisierungsgerät (10) vorgehalten wird oder auf die das Automatisierungsgerät (10) Zugriff hat, und dynamische Mediendaten (24) aus einer zweiten Datenbasis (26) für dynamische Mediendaten, die auf dem Automatisierungsgerät (10) vorgehalten wird oder auf die das Automatisierungsgerät (10) Zugriff hat, kombiniert werden,
wobei die dynamischen Mediendaten (24) Daten zum Status und/oder zur Konfiguration des Automatisierungsgeräts (10) umfassen und
wobei die Mediendaten (15) aus einer Kombination von Bildschirmmasken repräsentierenden statischen Mediendaten (20) und einzelnen Status- und/oder Konfigurationsinformationen des Automatisierungsgeräts (10) repräsentierenden dynamischen Mediendaten (24) entstehen.

2. Verfahren nach Anspruch 1, wobei das Kombinieren statischer und/oder dynamischer Mediendaten (20, 24) aufgrund des empfangenen Datums (18) derart erfolgt, dass das Datum (18) auf Seiten des Bediengerätes (12) entsprechend einer Auswahl eines Bedieners ausgewählt oder erzeugt wird, dass das Datum diejenigen statischen und/oder dynamischen Mediendaten (20, 24), die aufgrund einer festgelegten oder dynamischen Beziehung mit der Auswahl des Benutzers assoziiert sind, referenziert, dass eine Kombination der referenzierten Mediendaten,
eine anschließende Kodierung der kombinierten Mediendaten (30) und schließlich ein Transfer der kodierten Mediendaten (15) an das Bediengerät (12) als Antwort auf das übersandte Datum (18) erfolgt.

3. Verfahren nach Anspruch 1 oder 2, wobei die Mediendaten (15) auf Seiten des Bediengerätes (12) wiedergegeben werden, wobei ein Vorspulen und Rückspulen zu bereits wiedergegebenen bzw. noch nicht wiedergegebenen Wiedergabepositionen möglich ist.

4. Verfahren nach Anspruch 3, wobei die Mediendaten (15) Positionskennungen umfassen und wobei mittels jeweils einer solchen Positionskennung eine schnelle Justierung der Wiedergabeposition möglich ist.

5. Verfahren nach einem oder mehreren der vorangehenden Ansprüche, wobei die Mediendaten (15) vom Automatisierungsgerät (10) an das Bediengerät (12) mittels einer auf Ebene der Transportschicht ablaufenden Kommunikation erfolgt.

6. Automatisierungsgerät (10) mit einem Zugriff auf eine erste Datenbasis (22) für statische Mediendaten, einem Zugriff auf eine zweite Datenbasis (24) für dynamische Mediendaten, einem Kombinierer (28) zum Kombinieren von statischen und/oder
dynamischen Mediendaten (20, 24), einem Kodierer (14) zum Kodieren kombinierter Mediendaten (30) und einer Schnittstelle (32) zum Transfer der kodierten kombinierten Mediendaten (15) an ein entferntes Bediengerät (12) und Mitteln zum Ausführen der automatisierungsgerätsseitigen Verfahrensschritte gemäß einem oder mehreren der Ansprüche 1 bis 5.

7. Computerprogramm mit durch einen Computer ausführbaren Programmcodeanweisungen zur Implementierung der automatisierungsgerätsseitigen Verfahrensschritte gemäß einem der Ansprüche 1 bis 5 wenn das Computerprogramm auf einem Computer eines Automatisierungsgeräts ausgeführt wird.

8. Computerprogrammprodukt, insbesondere Speichermedium, mit einem durch einen Computer ausführbaren Computerprogramm gemäß Anspruch 7.

## Claims

1. Method for operating an automation appliance (10) in combination with a connected operator control appliance (12), where the automation appliance (10) comprises encoding means (14) for encoding media data, and the operator control appliance (12) comprises decoding means (16) for decoding such media data,
having the following method steps:
at least one data item (18) is sent from the operator control appliance (12) to the automation appliance (10) in order to request media data (15) from the automation appliance (10),
media data (15) are generated by the encoding means (14) in line with the received data item (18),
the media data (15) are transmitted from the automation appliance (10) to the connected operator control appliance (12),
the received media data are decoded, particularly decoded and reproduced, on the operator control appliance (12) by the decoding means (16),
where, to obtain the media data (15), static media data (20) from a first database (22) for static media data which is held on the automation appliance (10) or to which the automation appliance (10) has access and dynamic media data (24) from a second database (26) for dynamic media data which is held on the automation appliance (10) or to which the automation appliance (10) has access are combined, where the dynamic media data (24) comprise data relating to the status and/or to the configuration of the automation appliance (10) and where the media data (15) are produced from a combination of static media data (20), representing screen masks, and dynamic media data (24), representing individual status and/or configuration information from the automation appliance (10).

2. Method according to Claim 1, where static and/or dynamic media data (20, 24) are combined on the basis of the received data item (18) such that the data item (18) is selected or produced on the operator control appliance (12) in line with a selection by an operator, that the data item references those static and/or dynamic media data (20, 24) which are associated with the user's selection on the basis of a stipulated or dynamic relationship, and that the referenced media data are combined, the combined media data (30) are subsequently encoded and finally the encoded media data (15) are transferred to the operator control appliance (12) in response to the transmitted data item (18).

3. Method according to Claim 1 or 2, where the media data (15) are reproduced on the operator control appliance (12), it being possible to fast forward and rewind to reproduction positions which have already been reproduced or which have not yet been reproduced.

4. Method according to Claim 3, where the media data (15) comprise position identifiers and where a respective position identifier of this kind can be used for rapid alignment of the reproduction position.

5. Method according to one or more of the preceding claims, where the media data (15) are transmitted from the automation appliance (10) to the operator control appliance (12) by means of communication which takes place at the level of the transport layer.

6. Automation appliance (10) having access to a first database (22) for static media data, access to a second database (24) for dynamic media data, a combiner (28) for combining static and/or dynamic media data (20, 24), an encoder (14) for encoding combined media data (30) and an interface (32) for transferring the encoded combined media data (15) to a remote operator control appliance (12), and means for executing the automation appliance's method steps according to one or more of Claims 1 to 5.

7. Computer program having program code instructions, which can be executed by a computer, for implementing the automation appliance's method steps according to one of Claims 1 to 5 when the computer program is executed on a computer of an automation appliance.

8. Computer program product, particularly storage medium, having a computer program which can be executed by a computer according to Claim 7.

## Revendications

1. Procédé pour faire fonctionner un appareil ( 10 ) d'automatisation en combinaison avec un appareil ( 12 ) de commande raccordé, l'appareil ( 10 ) d'automatisation comprenant des moyens ( 14 ) de codage de données de support et l'appareil ( 12 ) de commande des moyens ( 16 ) de décodage de telles données de support,
comprenant les stades de procédé suivants :
envoi d'au moins une donnée ( 18 ) de l'appareil ( 12 ) de commande à l'appareil ( 10 ) d'automatisation pour demander des données ( 15 ) de support de l'appareil ( 10 ) d'automatisation,
production de données ( 15 ) de support par le ou les moyens ( 14 ) de codage conformément à la donnée ( 18 ) reçue, transmission des données ( 15 ) de support de l'appareil ( 10 ) d'automatisation à l'appareil ( 12 ) de commande raccordé,
décodage, notamment décodage et reproduction, des données de support reçues sur l'appareil ( 12 ) de commande par le ou les moyens ( 16 ) de décodage,
dans lequel, pour obtenir les données ( 15 ) de support, on combine des données ( 20 ) de support statiques d'une première base ( 22 ) de données de support statiques, qui est conservée sur l'appareil ( 10 ) d'automatisation ou à laquelle l'appareil ( 10 ) d'automatisation a accès, et des données ( 24 ) de support dynamiques d'une deuxième base ( 26 ) de données de support dynamiques, qui est conservée sur l'appareil ( 10 ) d'automatisation ou à laquelle l'appareil ( 10 ) d'automatisation a accès,
dans lequel les données ( 24 ) de support dynamique comprennent des données sur l'état et/ou la configuration de 1"appareil ( 10 ) d'automatisation et
dans lequel les données ( 15 ) de support proviennent d'une combinaison de données ( 20 ) de support statiques représentant des masques d'écran et de données ( 24 ) de support dynamiques représentant diverses informations d'état et/ou de configuration de l'appareil ( 10 ) d'automatisation.

2. Procédé suivant la revendication 1, dans lequel la combinaison de données ( 20, 24 ) de support statiques et/ou dynamiques s'effectue sur la base de la donnée ( 18 ) reçue de manière à ce que la donnée ( 18 ) soit sélectionnée ou produite du côté de l'appareil ( 12 ) de commande d'une manière qui corresponde à un choix d'un opérateur, en ce que la donnée se réfère aux données ( 20, 24 ) de support statiques et/ou dynamiques qui, sur la base d'une relation fixée ou dynamique, sont associées au choix de l'opérateur, en ce qu'une combinaison des données de support référencées, un codage ensuite des données ( 30 ) de support combinées et finalement un transfert des données ( 15 ) de support codées à l'appareil ( 12 ) de commande s'effectue comme réponse à la donnée ( 18 ) transmise.

3. Procédé suivant la revendication 1 ou 2, dans lequel les données ( 15 ) de support sont reproduites du côté de l'appareil ( 12 ) de commande, un prétamponnage et un retamponnage en retour étant possible en des positions déjà reproduites ou pas encore reproduites.

4. Procédé suivant la revendication 3, dans lequel les données ( 15 ) de support comprennent des caractérisations de position et dans lequel, au moyen de respectivement une caractérisation de position de ce genre, un réglage rapide de la position de reproduction est possible.

5. Procédé suivant l'une ou plusieurs des revendications précédentes, dans lequel la transmission des données ( 15 ) de support de l'appareil ( 10 ) d'automatisation à l'appareil ( 12 ) de commande s'effectue à l'aide d'une communication se déroulant sur le plan de la couche de transport.

6. Appareil ( 10 ) d'automatisation ayant un accès à une première base ( 22 ) de données de support statiques, un accès à une deuxième base ( 24 ) de données de support dynamiques, un combinateur ( 28 ) de combinaison de données ( 20, 24 ) de support statiques et/ou dynamiques, un codeur ( 14 ) de codage de données ( 30 ) de support combinées et une interface ( 32 ) de transfert de données ( 15 ) de support combinées et codées à un appareil ( 12 ) de commande éloigné et des moyens de réalisation des stades de procédé du côté de l'appareil d'automatisation suivant l'une ou plusieurs des revendications 1 à 5.

7. Programme d'ordinateur ayant des instructions de code de programme pouvant être réalisées par un ordinateur, pour la mise en oeuvre des stades de procédé du côté de l'appareil d'automatisation suivant l'une des revendications 1 à 5, lorsque le programme d'ordinateur est réalisé sur un ordinateur d'un appareil d'automatisation.

8. Produit de programme d'ordinateur, notamment support de mémoire ayant un programme d'ordinateur suivant la revendication 7 pouvant être réalisé par un ordinateur.
